(19)

Europäisches
Patentamt
European
Patent Office
Office européen
des brevets

(11) **EP 3 379 296 A1**

(12) **EUROPEAN PATENT APPLICATION**

(43) Date of publication:
**26.09.2018 Bulletin 2018/39**

(51) Int Cl.:
***G01T 1/24*** *(2006.01)*

(21) Application number: **17162792.0**

(22) Date of filing: **24.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nederlandse Organisatie voor
toegepast-
natuurwetenschappelijk onderzoek TNO
2595 DA 's-Gravenhage (NL)**

(72) Inventor: **BUIS, Ernst Jan
2595 DA 's-Gravenhage (NL)**

(74) Representative: **V.O.
P.O. Box 87930
Carnegieplein 5
2508 DH Den Haag (NL)**

(54) **PARTICLE DETECTOR, PARTICLE DETECTION ARRAY AND METHOD FOR PARTICLE
DETECTION**

(57)      A particle detector is provided that comprises an optically active element (10a), a particle to charge-carrier conversion element (21a), a charge carrier multiplier (22a) and an optical waveguide (30). The particle to charge-carrier conversion element (21a) is configured to generate at least one charge carrier upon absorbing a particle ($\gamma$) and the charge carrier multiplier (22a) is configured to generate a charge carrier cloud (23a) with a plurality of charge carriers within the optically active element (10a), the optically active element (10a) having an optically detectable property dependent on the presence of charge carriers generated by the charge carrier multiplier (22a). The optically active element is optically coupled to the waveguide (30), therewith allowing the optically active element to receive an optic interrogation signal from an external source (40) and to allow an external recipient to receive an optic response signal from said optically active element, which optic response signal is modified in accordance with said changed optically detectable property.

FIG. 1

**Description**

BACKGROUND OF THE INVENTION

Field of the invention

The present invention pertains to a particle detector.
The present invention pertains to a particle detection array.
The present invention further pertains to a method for particle detection.

Related Art

Single particle detection is applied in large number of fields, such as big science, astronomy and semiconductor industry. Silicon pixel detectors that are developed for high energy particle and X-ray detection have found, next to their application in large scale high energy particle systems, an application outside this field as well. Pixel detectors are commonly used in the medical fields (PET, mamography) as well as applications in material sciences (XRD, XRF). The development of pixel systems goes hand in hand with a large effort of micro-electronics R&D as the pixel detectors usually require a dedicated ASIC in the front-end read-out. It is a disadvantage of known detectors that relatively complicated means are required to read data for individual pixels.

SUMMARY OF THE INVENTION

It is a first object of the invention to provide a particle detector that can be more easily integrated into a particle detection array.
It is a second object to provide an improved particle detection array including a plurality of particle detectors.
It is a third object to provide an improved particle detection method.
In accordance with the first object the particle detector comprises an optically active element, a particle to charge-carrier conversion element, a charge carrier multiplier and an optical waveguide. The particle to charge-carrier conversion element is configured to generate at least one charge carrier upon absorbing a particle and the charge carrier multiplier is configured to generate a charge carrier cloud with a plurality of charge carriers within the optically active element. The particle to charge-carrier conversion element and the charge carrier multiplier may be provided as a single element having medium that is both capable to generate a charge carrier when it is impinged by a particle and capable to generate a plurality of free charge carriers from the charge carrier released by the particle. Alternatively these aspects may be provided by separate elements, e.g. a combination of an initial charge carrier releasing element, e.g. a photon cathode that releases a charge carrier when impinged by a photon and a charge carrier multiplier medium that releases a plurality of charge carriers in the presence of the charge carrier released by the initial charge carrier releasing element. Alternatively an initial charge carrier releasing element may be absent for example if the particles to be detected are themselves charge carriers, e.g. electrons or ions. The optically active element has an optically detectable property dependent on the presence of charge carriers generated by the charge carrier multiplier. The optically active element is optically coupled to the waveguide. The latter allows the optically active element to receive an optic interrogation signal from an external source and allows an external recipient to receive from the optically active element an optic response signal that is modified in accordance with the changed optically detectable property.
In an embodiment the optically active element is integrated with a semiconductor diode. In this manner a further improvement of charge carrier density inside the optically active element is obtainable, allowing for an improved sensitivity.
A change in an optically detectable property can for example be a change in refractive index or a change in absorption. The latter can be measured relatively easily by measuring an intensity of the optic response signal. In an embodiment the optically active element is an optical resonator. In this embodiment a resonance wavelength of resonator is dependent on the value of the refractive index as determined by the charge carrier density. It is an advantage of this embodiment that the optically active element can be easily combined with other optically active element on a single waveguide, provided that the optically active elements have a mutually different wavelength. This can be achieved for example by providing the optically active elements with mutually different resonator lengths or by operating the optically active elements at mutually different resonance modes or by a combination of both.
In an embodiment the optical resonator is formed as an elevated portion of a semiconductor diode. In that embodiment a base portion of the semiconductor diode and the optical waveguide may be arranged in a common layer. Therewith an optical coupling is obtained between the optical waveguide and the optical resonator.
In an embodiment the optical resonator is ring-shaped. However also other arrangements are possible as described in more detail in the sequel.
Various options are possible for each of the elements of the particle detector. For example, the charge carrier multiplier may be provided as a multi channel plate or as a dual multi channel plate, but may alternatively be applied as for example a MEMS transmission dynode configuration. As indicated above, the element used as the charge carrier multiplier may also serve as the particle to charge-carrier conversion element, but alternatively a separate element, such as a photo cathode may be provided for this purpose.
In accordance with the second object a particle detection array is provided that comprises a plurality of spatially distributed particle detectors, having respective optical resonators with mutually different resonant wavelengths and being coupled to a common optical waveguide. The particle detection array may be part of a particle detection system that further comprises an interrogator coupled to the common optical waveguide, that is arranged to transmit the optic interrogation signal via the common optical waveguide to the plurality of spatially distributed particle detectors, and that is further arranged to receive the optic response signal from the plurality of spatially distributed particle detectors. The common optical waveguide may have separate portions for transmitting the interrogation signal from the interrogator to the particle detection array and to transmit the response signal from the particle detection array to the interrogator. Alternatively the interrogation signal and the response signal may be transmitted via the same waveguide portion. In again another embodiment a separate interrogation signal generator and response signal receiver may be provided instead of an interrogator having the combined functionality.

The method for detecting a particle in accordance with the third object comprises the steps of:

- receiving a particle by a charge-carrier conversion element to generate at least one charge carrier to generate at least one charge carrier upon absorbing the particle;
- said at least one charge carrier initiating a process of generating a charge carrier cloud with a plurality of charge carriers;
- receiving the plurality of charge carriers in an optically active medium that has an optically detectable property dependent on a density of the charge carriers;
- providing the optically active medium with an optic interrogation signal; and
- receiving an optic response signal from said optically active medium, which optic response signal is modified in accordance with said changed optically detectable property.

In an embodiment the optically detectable property dependent on a density of the charge carriers is a refractive index, wherein the optically active medium forms an optic resonator, and wherein the optic response signal is modified by a shift in resonance wavelength of the optic resonator due to a shift in refractive index of the optically active medium.

BRIEF DESCRIPTION OF THE DRAWINGS

These and other aspects are described in more detail with reference to the drawing. Therein:

FIG. 1 schematically shows an embodiment of a particle detection system comprising a particle detection array with a plurality of particle detectors and an interrogator,

FIG. 2A, 2B schematically illustrate a portion of a particle detector in more detail. Therein FIG. 2B shows a cross-section according to IIB-IIB in FIG. 2A,

FIG. 3A, 3B schematically illustrates an embodiment of a particle detector in more detail. Therein FIG. 3B shows a cross-section according to IIIB-IIIB in FIG. 3A,

FIG. 4 schematically shows a particle detection system comprising a particle detection array and an interrogator coupled thereto.

DETAILED DESCRIPTION OF EMBODIMENTS

Like reference symbols in the various drawings indicate like elements unless otherwise indicated.

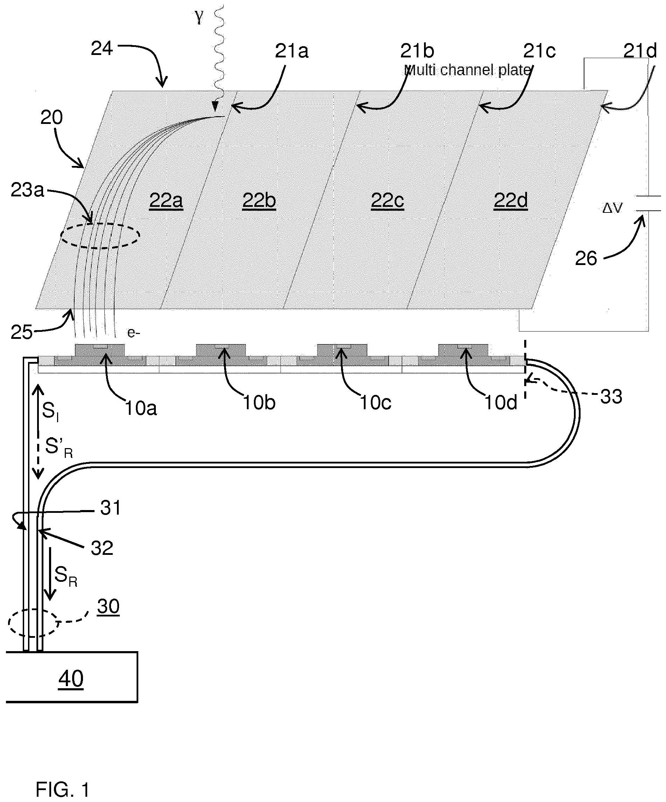

FIG. 1 schematically shows an embodiment of a particle detector. The particle detector shown therein comprises an optically active element 10a, a particle to charge-carrier conversion element 21a, a charge carrier multiplier 22a and an optical waveguide 30. The particle to charge-carrier conversion element 21a is configured to generate at least one charge carrier upon absorbing a particle $\gamma$ and the charge carrier multiplier 22a is configured to generate a charge carrier cloud 23a. In the embodiment shown, the particle to charge-carrier conversion element 21a and the charge carrier multiplier 22a are one of a respective set of particle to charge-carrier conversion elements 21a,..,21d and a respective set of charge carrier multipliers 22a,...,22d provided in a multi-channel plate MCP. Therein the particle to charge-carrier conversion elements 21a,..,21d are respective walls in the MCP that separate the MCP into the plurality of channels. Suitable materials for the MCP are for example of a dielectric material, such as a glass. The walls 21a,...,21d are formed for example of a photo-electric material like CsI, CuI, KBr and Au By way of example the optically active elements 10a,...,10d may be provided at a pitch of 10 $\mu$m. Although FIG. 1 shows the optically active elements arranged in a linear array, they may alternatively be arranged in a two-dimensional grid, e.g. a rectangular or hexagonal grid.

The MCP is maintained in a Geiger mode by an external voltage source 26 that applies an electric field between mutually opposite sides 24, 25 of the multichannel plate MCP 20. The optically active element 10a is one of a plurality of optically active elements 10a,...,10d, each of which is configured to receive a charge carrier cloud 23a from a respective one of the charge carrier multipliers 22a,...,22d.

The optically active elements 10a,...,10d have an optically detectable property dependent on the presence of charge carriers received from the charge carrier multipliers 22a,...,22d. The optically active elements are optically coupled to the waveguide 30. This allows the optically active elements 10a,...,10d to receive an optic interrogation signal $S_I$ from an external source and allows an external recipient to receive an optic response signal $S_R$ from the optically active elements. In this case an interrogator is provided that both provides the optic interrogation signal $S_I$ to the optically active elements 10a,...,10d via the waveguide 30 and that receives the optic response signal $S_R$ from the optically active elements via the waveguide. The optic response signal $S_R$ is modified in accordance with the changed optically detectable property induced in an optically active element, e.g. 10a receiving a charge carrier cloud, e.g. 23a from a respective charge carrier multiplier e.g. 22a. In the embodiment shown the optically active elements 10a,...,10d are optic resonators having a resonance wavelength as their optically detectable property. In particular the optic resonators 10a,...,10d have mutually different resonance wavelengths so that their optic response signals $S_R$ can be distinguished from each other by the interrogator 40. In the embodiment shown the waveguide 30 has first part 31 that serves to guide the optic interrogation signal $S_I$ to the optically active elements 10a,...,10d and the waveguide 30 has second part 32 to guide the optic response signal $S_R$ from the optically active elements 10a,...,10d. In other embodiments the waveguide may comprise only a single waveguide to guide the optic interrogation signal $S_I$ from the interrogator to the optically active elements 10a,...,10d and to guide the optic response signal $S_R$ from the optically active elements 10a,...,10d to the interrogator 40. For example, as indicated by the dashed elements, a mirror element 33 may be present that reflects the optic response signal of the optic resonators, so that it can be received by the interrogator via the same wave guide part 31.

In operation a particle $\gamma$ may impinge upon one of the particle to charge-carrier conversion elements, e.g. element 21a and therewith cause the element 21a to produce a charge carrier (e.g. an electron). Inside the charge carrier multiplier 22a, maintained in Geigermode an avalanche effect results in generation of a charge carrier cloud 23a that is received by the optically active element 10a. In the optically active element 10a a further avalanche effect occurs. The presence of charge carriers from the charge carrier cloud 23a inside the optically active element causes a change of its optically detectable property. As a result of a further avalanche effect that occurs in the medium of the optically active element the charge carrier density therein is a multiplicity of the charge carrier density directly caused by the cloud. As a result the interrogation signal $S_I$ issued by the interrogator 40 is detectably modified in accordance with this change of optically detectable property and therewith detectable in received response signal $S_R$. In particular, it is detectable which of the optically active elements 10a,...,10d caused the modification as the optic resonators 10a,...,10d have mutually different resonance wavelengths.

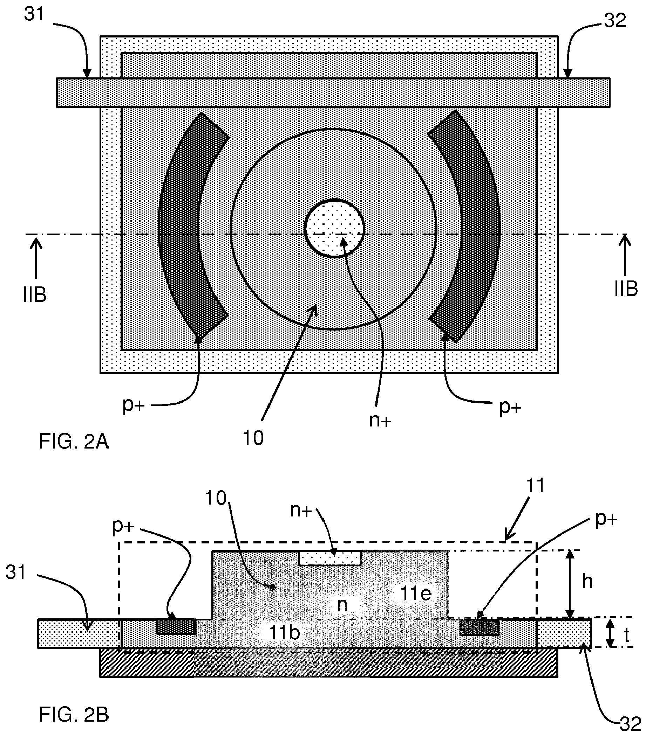

FIG. 2A, 2B show an embodiment of the optically active element 10, which is used for example for the elements 10a,...,10d. Therein FIG. 2A shows a top-view and FIG. 2B shows a cross-section according to IIB-IIB in FIG. 2A. In the embodiment shown in FIG. 2A, 2B, the optically active element 10 is integrated with a semiconductor diode 11 having doped areas n+ and p+.. As mentioned above, in this case the optically active element 10 is an optical resonator, in particular a ring resonator. In other embodiments another type of optical resonator may be provided. For example the resonator may be formed as a linear oscillator or as an oscillator comprising a combination of linear portions and curved portions. In again other embodiments the optically active element 10 may have an optically detectable property other than a wavelength, for example an attenuation. However an optically active element having a wavelength as its optically detectable property is preferred as this facilitates an independent reading of the elements 10a,...,10d, even when a single waveguide is used to guide the response signals. As can best be seen in FIG. 2B, in this embodiment the optical resonator 10 is formed as an elevated portion 11e of said semiconductor diode 11. As also visible particularly in FIG. 2B, the base portion 11b of the semiconductor diode and the optical waveguide 31, 32 are arranged in a common layer. In an embodiment the elevated portion 11e of the semiconductor diode may have a height h with an order of magnitude of 0.05 to about 0.5 micron and the base portion 11b may have a thickness in the same order of magnitude, e.g. in the range of 0.1 to 1.5 times the height of the elevated portion, for example about half the height of the elevated portion. In an exemplary embodiment the elevated portion 11e of the semiconductor diode 11 has a height h of about 0.2 micron and the base portion 11b of the semiconductor diode 11 has a thickness t of about 0.1 micron.

The optical resonator 10 is formed as an elevated portion 11e of said semiconductor diode 11. The portion 11e is formed of a material showing an electro-optical effect in that the value of its refractive index (n) and its absorption ($\alpha$) depend on a density of free charge carriers Ne, Nh in the material, wherein Ne is the density of free electrons and Nh is the density of holes. The variation of these properties is substantially proportional to the variation in Ne, Nh. Suitable materials for this purpose are for example: Si, InP, InGaAsP and GaAs. A change ($\Delta$n) in refractive index becomes detectable as a change in resonance wavelength of the optical resonator, according to the relation:

$$\lambda = \frac{2\pi n_{eq} R}{m_\lambda}$$

where $n_{eq}$ is the effective index of refraction, R the radius of the resonator and $m_\lambda$ an arbitrary integer, also called the mode number. Accordingly, a resonance wavelength of an optical resonator can be set by its radius, and by providing resonators with mutually different radii they have a mutually different resonance wavelength. In the example shown in FIG. 2B the radius of the optic resonator may be in the order of 1 to 100 micron, In particular the radius R has a value of d/2 = 5 micron.

It is not necessary that the optical resonator is a ring shaped. Any shape is suitable that allows for a clear resonance mode. For example the optical resonator may have a pair of mutually parallel straight portions that are coupled at their ends to each other by a respective curved portion. Also it may be contemplated to have a single elongated portion. In general, the resonance wavelength is determined by a length L of the resonance cavity.

$$\lambda = \frac{n_{eq}L}{m_\lambda}$$

An important parameter of ring resonators is the quality factor Q, which is given by:

$$Q = \frac{\lambda}{2\delta_\lambda}$$

Wherein $\delta_\lambda$ is the bandwidth of the resonator. A higher Q factor is preferred as it corresponds to a narrower bandwidth of the resonator. Typically the order of magnitude of difference in resonance wavelength of optical detectors in a detector array according to the invention are chosen as to be at least this bandwidth. This in turn makes it possible to allow a larger number resonators share a single waveguide. So for example if the value for Q = 10000, and the interrogation signal is in the micrometer range than the resonance wavelength may be separated by a difference in the order of 0.1 nm. If the value for Q = 100000, a difference in the order of 0.01 nm is sufficient. An additional advantage of a high Q-value and the associated small bandwidth is that a relatively small change in charge carrier density is sufficient to be detected. Referring again to the above example it is estimated that for a Q-factor 10000 the minimally required change in charge density ($\Delta$n) that is detectable is in the order of $10^5/\mu m^3$. At a Q-factor increased to 100000 the detectable value for $\Delta$n is reduced to $10^4/\mu m^3$. This relaxes the requirements for the charge carrier multiplier.

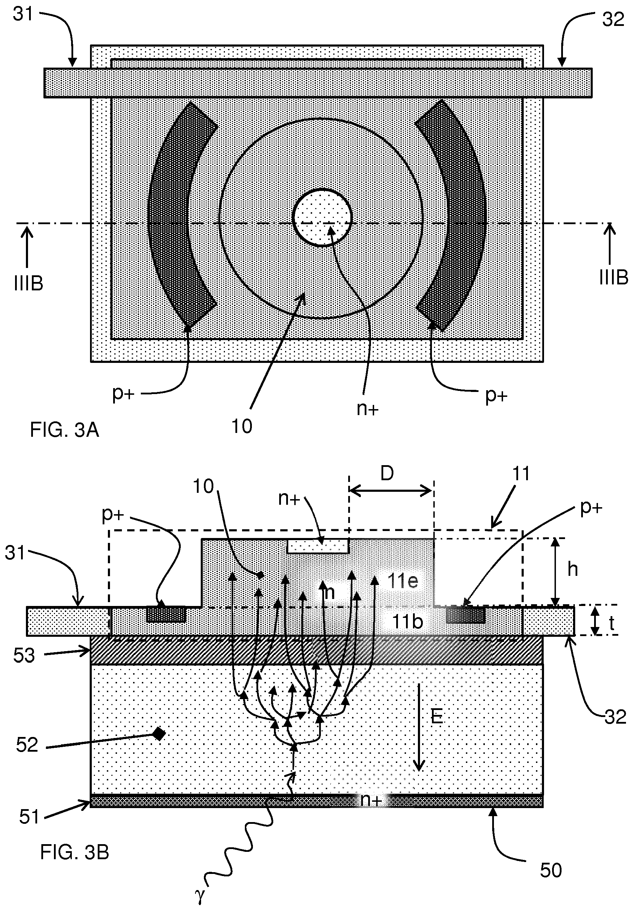

FIG. 3A, 3B show another embodiment of the optically active element 10. Therein FIG. 3A shows a top-view and FIG. 3B shows a cross-section according to IIIB-IIIB in FIG. 3A. As in the embodiment shown in FIG. 2A, 2B, the optically active element 10 is integrated with a semiconductor diode 11. In this embodiment the resonator 10, 11 is arranged on a stack 50 comprising a relatively thick substrate layer 52. For example the substrate 52 may have a thickness in the range of 10 to 300 micron. The stack 50 further comprises a positively doped layer 51 at a side facing away from the semiconductor diode 11 and an insulating layer 53 between the substrate 52 and the diode 11. The insulating layer 53 may for example be a SiO2 layer having a thickness in the range of 1 to 10 micron, for example 2 to 5 micron.

An electric field E is applied over the substrate 52 at a value close to breakdown, i.e. the Geiger mode. To that end mutually opposite substrate surfaces, one close to the optically active element 10 and one on the opposite side thereof, may be provided with a metal coating between which a voltage is applied. Dependent on the material used for the substrate and its thickness the voltage may be in the range of a few hundred to a few thousand volt, for example between 500 and 5000 V, for example about 1000V. Free charge carriers in the substrate due to ionizing radiation will then multiply with sufficient gain factors and reach the electro-optical medium that forms the optic resonator of the optical detector 10. The increased number of charge carriers in this medium in particularly causes a change in the refractive index n of this material, which becomes detectable as a change in the resonance wavelength of the resonator 10. The conditions in the semiconductor diode 11 may provide for an additional avalanche effect upon arrival of the charge carriers from the substrate that result in an even more significant change in charge carrier density in the medium and therewith an even more prominent change in refractive index and consequent change resonance wavelength..

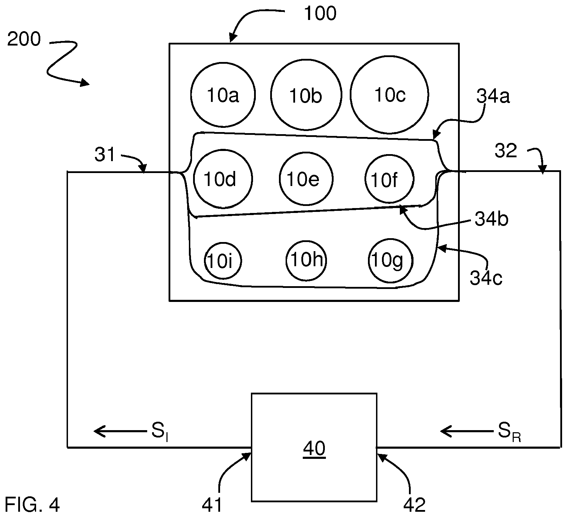

FIG. 4 schematically shows a particle detection array 100 that comprises a plurality of spatially distributed particle detectors 10a,...,10i. The particle detectors 10a,...,10i each have a proper optical resonator, and these optical resonators have mutually different resonant wavelengths, as is schematically indicated by their mutually different size with which the particle detectors 10a,...,10i are illustrated in the drawing. The particle detection array 100 is part of a particle detection system 200 that further comprises an interrogator 40. The particle detectors 10a,...,10i of the particle detection array 100 are optically coupled to end portions 31, 32 of a common optical waveguide. End portion 31 is coupled to an output 41 of the interrogator 41 that provides an interrogation signal $S_I$. The end portion 32 is coupled to an input 42 of the interrogator to receive the optic response signal $S_R$ provided by the plurality of particle detectors. In the embodiment shown the particle detectors 10a,...,10i are optically coupled to the waveguide via waveguide branches 34a, 34b, 34c. In particular branch 34a is optically coupled to particle detectors 10a, 10b, 10c, branch 34b is optically coupled to particle detectors 10d, 10e, 10f, and branch 34c is optically coupled to particle detectors 10g, 10h, 10i. In an alternative embodiment the end portions 31, 32 of the waveguide may be optically coupled to all particle detectors 10a,...,10i, by a single coupling waveguide that meanders along all particle detectors.

In an embodiment the interrogator 40 generates a wide spectrum beam at its output 42 and detects in the received optic response signal $S_R$ at which wavelengths an absorption occurs. If one of the particle detectors 10a,...,10i receives a charge carrier cloud produced by an impinging particle its resonance wavelength is shifted away from its reference resonance wavelength. Accordingly the identity of the particle detector corresponding to the location of the impinging particle is determined as the wavelength range wherein a change occurs in the optic response signal $S_R$. The interrogator may for example detect a change in amplitude at wavelength corresponding to the reference value of the resonant wavelengths for each of the optical detectors. Alternatively, the interrogator may for example detect a change in amplitude at wavelength corresponding to the shifted position of the resonant wavelengths for each of the optical detectors. In again another embodiment the interrogator may track the current value of the resonance wavelengths of the detectors. In again another approach the interrogator 40 issues an interrogation signal SI in the form of a beam having a relatively narrow bandwidth around a center wavelength that is periodically swept along the wavelength range covered by the set of optical detectors, and sequentially detects changes occurring near the resonance wavelength of each of the detectors 10a,...,10i.

In an embodiment the optical detectors have respective principal resonance wavelength that is relatively large as compared to a higher boundary of a measurement range of wavelengths used by an interrogator, and the interrogator is configured to detect changes in higher order resonance modes of individual optical detectors. This renders it possible to provide the resonators with relatively large dimensions. Therewith the resonators can have a relatively high sensitivity, whereas enabling operation of the interrogator in a favorable wavelength range, e.g. in the in a range between 1 and 10 micron.

In this embodiment, each resonator ring i gives a response in one or more respective ranges $\lambda i_1/k \pm \Delta i_k$, wherein $\lambda i_1$ is the first order resonance mode of the resonator and $\Delta i_k$ is the bandwidth of that resonator in mode k.

It is not necessary that the response ranges of a first resonator and the response range of a second resonator are all distinct. It is sufficient that their response patterns are different, enabling the interrogator to distinguish which of the response pattern is shifted upon an impinging particle, and therewith can determine the identity of the resonator that captured the charge carrier cloud resulting from an impinging particle.

In a simulation various configurations were examined of ring resonators having a radius R ranging from 3 to 13 $\mu$, and operating these at different modes. For that purpose the MEEP software package was used as described in Oskooi et al. "MEEP: A flexible free-software package for electromagnetic simulations by the FDTD method". Computer Physics Communications, 181:687-702, January 2010.

The following table respective shows from the left to the right the radius R in micron, the wavelength $\lambda$ in micron, the ratio between the radius and the wavelength and the Q-value. The value in the table is expressed in units of thousand and hence ranges from about 20000 to about 120000.

In this case, the ring thickness D (FIG. 3B) was kept to 1 $\mu$m, but these dimensions (as well as other dimensions like the height of the disk and the size and position of the electrodes can be further varied to obtain other response patterns. Also other changes are possible, such as the geometry of the resonator (ring, disk or linear cavity), the coupling of the resonator to the waveguide and the like.

Therewith a larger set of resonators having mutually different response patterns can be obtained enabling integration of a larger set of detectors with a single waveguide.

| R($\mu$) | $\lambda$($\mu$) | R/$\lambda$ | Q(x1000) |
|---|---|---|---|
| 3 | 1.57 | 1.910828 | 20 |
| 3 | 1.5 | 2 | 20 |
| 3 | 1.25 | 2.4 | 50 |
| 3 | 1.05 | 2.857143 | 20 |
| 3 | 1 | 3 | 50 |
| 4 | 1.25 | 3.2 | 20 |
| 4 | 1.12 | 3.571429 | 30 |
| 4 | 0.95 | 4.210526 | 20 |
| 5 | 1.85 | 2.702703 | 20 |
| 5 | 1 | 5 | 70 |
| 6 | 1.15 | 5.217391 | 20 |
| 6 | 1.05 | 5.714286 | 20 |
| 7 | 1.97 | 3.553299 | 20 |
| 8 | 1.25 | 6.4 | 120 |
| 8 | 1.05 | 7.619048 | 20 |
| 8 | 0.95 | 8.421053 | 20 |
| 9 | 1.32 | 6.818182 | 20 |
| 9 | 1.27 | 7.086614 | 20 |
| 11 | 0.95 | 11.57895 | 20 |
| 13 | 1.16 | 11.2069 | 20 |

In this example the measurement wavelength range extends from about 0.9 micron to about 2 micron, and the resonator with radius 3 has resonance modes in the range of k=16 for the upper boundary of the measurement wavelength range to k = 33 for the lower boundary of the measurement wavelength range. Within this range its response pattern is dominated by the above-mentioned 5 resonance wavelengths. As another example, the resonator with radius 13 has resonance modes in the range of k=65 for the upper boundary of the measurement wavelength range to k = 145 for the lower boundary of the measurement wavelength range. Within this range its response pattern is dominated by a single resonance wavelength of 1.16 micron.

In an embodiment an array may be provided for example comprising a plurality of spatially distributed particle detectors having the radii as specified in this table and be coupled to a common optical waveguide. The mutually different response patterns enable the interrogator to distinguish which thereof is shifted upon an impinging particle, and therewith can determine the identity of the particle detector that captured the charge carrier cloud resulting from an impinging particle.

While the present invention has been described with respect to a limited number of embodiments, those skilled in the art will appreciate numerous modifications and variations therefrom within the scope of this present invention as determined by the appended claims

## Claims

1. A particle detector comprising an optically active element (10a), a particle to charge-carrier conversion element (21a), a charge carrier multiplier (22a) and an optical waveguide (30), wherein the particle to charge-carrier conversion element (21a) is configured to generate at least one charge carrier upon absorbing a particle (y) and the charge carrier multiplier (22a) is configured to generate a charge carrier cloud (23a) with a plurality of charge carriers within the optically active element (10a), the optically active element (10a) having an optically detectable property dependent on the presence of charge carriers generated by the charge carrier multiplier (22a), the optically active element being optically coupled to the waveguide (30), therewith allowing the optically active element to receive an optic interrogation signal from an external source (40) and to allow an external recipient to receive an optic response signal from said optically active element, which optic response signal is modified in accordance with said changed optically detectable property.

2. The particle detector according to claim 1, wherein the optically active element (10) is integrated with a semiconductor diode (11).

3. The particle detector according to claim 1 or 2, wherein the optically active element (10a) is an optical resonator.

4. The particle detector according to claim 3, wherein the optical resonator (10a) is formed as an elevated portion (11e) of said semiconductor diode (2).

5. The particle detector according to claim 4, wherein a base portion (11b) of said semiconductor diode and the optical waveguide (30) are arranged in a common layer.

6. The particle detector according to claim 1, wherein the optical resonator is ring-shaped.

7. The particle detector according to claim 1, wherein said charge carrier multiplier (20) is provided as a multi channel plate or as a dual multi channel plate.

8. The particle detector according to claim 1, wherein said charge carrier multiplier (20) is provided as a MEMS transmission dynode configuration.

9. A particle detection array comprising a plurality of spatially distributed particle detectors (10a,...,10d) as specified in one of the previous claims, wherein said optical waveguide (30) is a common optical waveguide and wherein the optical resonators have mutually different resonant wavelengths.

10. A particle detection system comprising the particle detection array according to claim 9, and further comprising an interrogator (40) coupled to said common optical waveguide (30) and arranged for transmitting the optic interrogation signal via said common optical waveguide to said plurality of spatially distributed particle detectors, and for receiving the optic response signal from said plurality of spatially distributed particle detectors (10a,...,10d).

11. A particle detection system according to claim 10, wherein respective values of the principal resonant wavelengths of the optical resonators are higher than an upper value of a wavelength range defined by the optic interrogation signal.

12. Method for detecting a particle comprising the steps of:

   - receiving a particle by a charge-carrier conversion element to generate at least one charge carrier to generate at least one charge carrier upon absorbing the particle;
   - said at least one charge carrier initiating a process of generating a charge carrier cloud with a plurality of charge carriers;
   - receiving the plurality of charge carriers in an optically active medium that has an optically detectable property dependent on a density of the charge carriers;
   - providing the optically active medium with an optic interrogation signal; and
   - receiving an optic response signal from said optically active medium, which optic response signal is modified in accordance with said changed optically detectable property.

13. The method according to claim 12, wherein the optically detectable property dependent on a density of the charge carriers is a refractive index, wherein the optically active medium forms an optic resonator, and wherein the optic response signal is modified by a shift in resonance wavelength of the optic resonator due to a shift in refractive index of the optically active medium.

14. The method according to claim 13, further comprising receiving the optic response signal from a common optical waveguide, identifying a shift in a response pattern and relating the shifted response pattern to one of a plurality of spatial locations.

15. The method according to claim 14, wherein the response pattern comprises one or more multiple of a principal resonant wavelengths that is higher than an upper value of a wavelength range defined by the optic interrogation signal.

FIG. 1

31

32

p+

p+

10

n+

IIB

IIB

FIG. 2A

11

10

n+

p+

p+

31

32

n

11e

11b

h

t

FIG. 2B

31

32

p+                                    p+

IIIB                                                              IIIB

10

n+

**FIG. 3A**

D                    11

10        n+                                p+

31                                          11e

p+                              n        11b        h

53                                                  t

E                                              32

52

51                                          n+

**FIG. 3B**                                          50

γ

FIG. 4

Europäisches
Patentamt

European
Patent Office

Office européen
des brevets

# EUROPEAN SEARCH REPORT

**Application Number**

EP 17 16 2792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/039666 A1 (KNIGHTS ANDREW P [CA] ET AL) 23 February 2006 (2006-02-23) * paragraphs [0031] - [0033], [0038] - [0045] * * figures 1,2 * | 1-15 | INV. G01T1/24 |
| A | WO 2008/024458 A2 (CORNELL RES FOUNDATION INC [US]; PREBLE STEFAN [US]; LIPSON MICHAL [US] 28 February 2008 (2008-02-28) * paragraphs [0011], [0013] - [0016], [0019], [0020] * * figures 1-3 * | 1-15 | |
| A | DE 196 50 073 A1 (JENOPTIK JENA GMBH [DE]) 4 June 1998 (1998-06-04) * column 6, line 48 - column 7, line 19 * * figure 1 * | 1-14 | |
| A | US 2007/116398 A1 (PAN DONG [US] ET AL) 24 May 2007 (2007-05-24) * paragraphs [0005], [0014], [0015] * * figures 1,2 * | 1-15 | TECHNICAL FIELDS SEARCHED (IPC) |
| A | VIG J R ET AL: "Microresonator sensor arrays", FREQUENCY CONTROL SYMPOSIUM, 1995. 49TH., PROCEEDINGS OF THE 1995 IEEE INTERNATIONAL SAN FRANCISCO, CA, USA 31 MAY-2 JUNE 1, NEW YORK, NY, USA,IEEE, US, 31 May 1995 (1995-05-31), pages 852-869, XP010155261, DOI: 10.1109/FREQ.1995.484096 ISBN: 978-0-7803-2500-5 * the whole document * | 1-15 | G02F G01T H01L |

The present search report has been drawn up for all claims

| Place of search | Date of completion of the search | Examiner |
|---|---|---|
| The Hague | 13 September 2017 | Wulveryck, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

....................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 17 16 2792

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2017

| Patent document cited in search report | Publication date | Patent family member(s) | Publication date |
|---|---|---|---|
| US 2006039666 A1 | 23-02-2006 | AU 2002356330 A1<br>US 2006039666 A1<br>US 2009127645 A1<br>US 2011013864 A1<br>WO 03060599 A2 | 30-07-2003<br>23-02-2006<br>21-05-2009<br>20-01-2011<br>24-07-2003 |
| WO 2008024458 A2 | 28-02-2008 | US 2011013266 A1<br>WO 2008024458 A2 | 20-01-2011<br>28-02-2008 |
| DE 19650073 A1 | 04-06-1998 | NONE | |
| US 2007116398 A1 | 24-05-2007 | US 2007116398 A1<br>WO 2007061986 A1 | 24-05-2007<br>31-05-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **OSKOOI et al.** MEEP: A flexible free-software package for electromagnetic simulations by the FDTD method. *Computer Physics Communications,* January 2010, vol. 181, 687-702